# DEMANDE DE BREVET EUROPEEN

(11) **EP 1 503 127 A2**
(43) Date de publication de la demande: **02.02.2005**
(21) Numéro de dépôt: 04291729.4
(22) Date de dépôt: 08.07.2004
(51) Int. Cl.: F16L 11/04

(54) **Conduite multicouche ayant une couche interne en un polymère basé sur un monomère pentène substitué**

(30) Priorité: 23.07.2003 FR 0308980
(71) Demandeur: NOBEL PLASTIQUES, 51300 Marolles (FR)
(72) Inventeur: Dabouineau, Johann, 51400 Dampierre au Temple (FR)
(74) Mandataire: Lavialle, Bruno

(57) **Abrégé**

Conduite multicouche ayant une couche interne (1) en matériau thermoplastique, caractérisée en ce que le matériau thermoplastique de la couche interne comporte un polymère basé sur un monomère pentène substitué.

## Description

La présente invention concerne une conduite multicouche, utilisable notamment dans un circuit de refroidissement d'un moteur thermique de véhicule automobile.

### ARRIERE PLAN DE L'INVENTION

Il existe de nombreuses structures de conduite, monocouche ou multicouche, destinées à être utilisées dans des circuits de transport de fluide embarqués sur les véhicules automobiles.

Le choix des matériaux les constituant résulte d'un compromis dans la satisfaction de nombreuses contraintes.

Ainsi, les conduites utilisées dans de tels circuits doivent notamment présenter une résistance chimique vis-à-vis du fluide transporté et ceci à des températures relativement élevées, des propriétés barrière au fluide transporté, une résistance à l'éclatement et à l'allongement à des températures (supérieure à 150°C) et à des pressions relativement élevées, et une résistance à l'oxygène dissout dans le fluide.

Ces contraintes sont de plus en plus difficiles à satisfaire du fait de l'augmentation des performances des moteurs thermiques et du durcissement des normes antipollution.

### OBJET DE L'INVENTION

Par l'invention, on entend proposer une structure de conduite qui constitue un compromis satisfaisant vis-à-vis des contraintes précitées.

### BREVE DESCRIPTION DE L'INVENTION

A cet effet, on prévoit, selon l'invention, une conduite multicouche, ayant une couche interne comportant un polymère basé sur un monomère 4-méthylpentène-1 et une couche externe comportant un polyamide.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux dessins annexés, parmi lesquels :
- les figures 1 et 2 sont des vues en coupe transversale d'une conduite selon un premier mode de réalisation de l'invention et selon une variante de ce mode de réalisation,
- les figures 3 à 6 sont des vues analogues à la figure 1 d'une conduite selon un deuxième mode de réalisation et selon trois variantes de ce mode de réalisation,
- la figure 7 est une vue analogue à la figure 1 d'une conduite conforme à un troisième mode de réalisation.

### DESCRIPTION DETAILLEE DE L'INVENTION

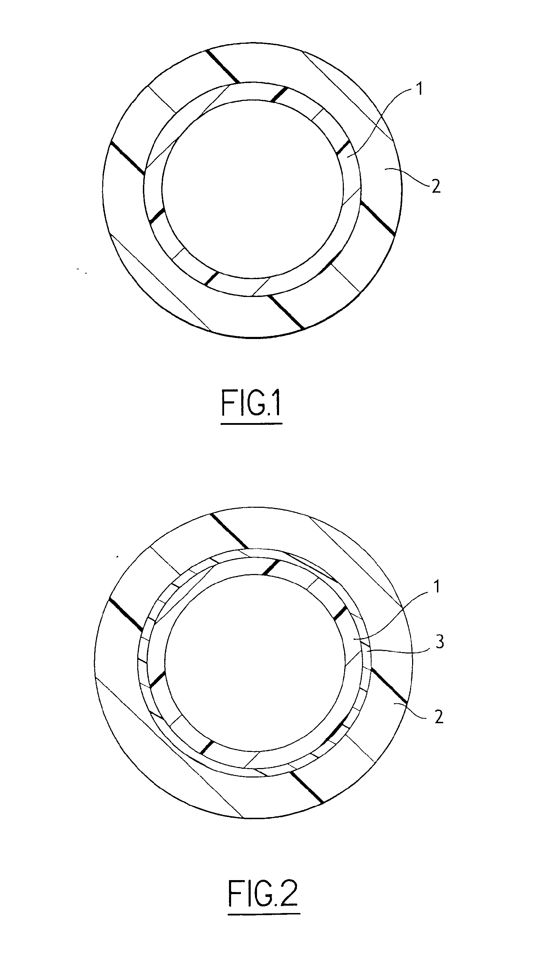

En référence à la figure 1, la conduite conforme au premier mode de réalisation de l'invention est une conduite bicouche qui comprend une couche interne 1 et une couche externe 2.

Le matériau utilisé pour la couche interne 1, qui sera en contact direct avec le fluide, est particulièrement résistant à l'hydrolyse.

La couche interne 1 est réalisée en un matériau thermoplastique formé d'un polymère basé sur un monomère pentène mono- ou poly- substitué. La substitution permet d'augmenter la masse moléculaire et d'améliorer la tenue en température.

Le monomère pentène substitué est un monomère pentène auquel est greffé au moins une fonction chimique méthyl ou éthyl. Plus précisément, le matériau utilisé est un polymère à base de 4-méthylpentène 1 tel que celui produit par la société MITSUI CHEMICALS sous les références TPX MW-001, MX-002, MX-004, MX-021, DX-810 ou autres.

Des copolymères du matériau précité peuvent en outre être utilisés.

La couche externe 2 est en un matériau thermoplastique destiné notamment à apporter à la conduite sa résistance mécanique sous pression et en température.

Le matériau thermoplastique utilisé comporte du polyamide tel qu'un polyamide 6-6, un polyamide 6, un polyamide 6-12, un polyamide 12. Le matériau à base de polyamide utilisé est par exemple ceux produits par la société EMS CHEMIE sous les références GRILAMID L25ANZ, XE3721 ou L25AH ; ou bien ceux produits par la société DEGUSSA-HÜLS sous les références VESTAMID X7394, X7376, LX9202, DX9304, DX9303, BS0628 ; ou bien encore ceux produits par la société ATOFINA sous les références RILSAN A M-AESN P210 TL ou A M-AESN P110 TL. Peuvent également convenir les matériaux à base de polyamide produits par la société RHODIA sous les références TECHNYL A302 ou A402 ; ou ceux produits par la société POLYONE sous les référence BERGAMID B 80 ou B 85 ; ou bien encore ceux produits par la société HONEYWELL sous les références CAPRON 8254 HS, 8354 LF, BE 50 S 2 HI HS, 8255 HS ou HPN 9350 HS.

Le matériau de la couche interne 1 forme une double barrière protégeant le matériau de la couche externe 2 qui est peu résistant à l'hydrolyse au-dessus de 100°C.

En variante, le matériau à base de polyamide utilisé pour la couche externe 2 peut être stabilisé vis-à-vis de l'hydrolyse et/ou de la glycolyse et/ou de la chaleur.

En variante encore, telle que représentée à la figure 2, une couche intermédiaire 3 est disposée entre la couche interne 1 et la couche externe 2.

La couche intermédiaire 3 est ici une couche de liaison réalisée en un matériau thermoplastique présentant des propriétés d'adhésion vis-à-vis des matériaux des couches interne 1 et externe 2.

Ce matériau comporte au moins une phase qui est compatible avec le matériau de la couche interne 1 et qui est modifiée par des fonctions chimiques compatibles avec le matériau de la couche externe 2 ; ou bien comporte au moins une phase qui est compatible avec le matériau de la couche externe 2 et qui est modifiée par des fonctions chimiques compatibles avec le matériau de la couche interne 1. Ce matériau peut également comporter sous forme de mélange un matériau compatible avec le matériau de la couche interne 1 et un matériau compatible avec le matériau de la couche externe 2.

Le matériau de la couche intermédiaire 3 est par exemple celui produit par la société MITSUI sous la référence TLN-4.

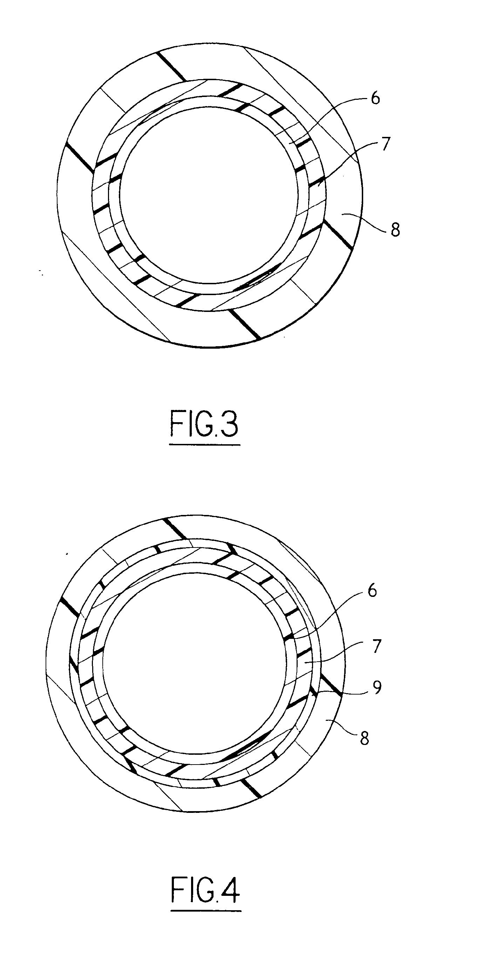

En référence à la figure 3, la conduite conforme au deuxième mode de réalisation de l'invention est une conduite tricouche comportant une couche interne 6, une couche intermédiaire 7, et une couche externe 8.

La couche interne 6 est réalisée en un matériau thermoplastique identique à celui de la couche interne 1 précédemment décrite.

La couche externe 8 est en un matériau thermoplastique identique à celui de la couche externe 2 précédemment décrite.

La couche intermédiaire 7 est réalisée en un matériau thermoplastique comportant une polyoléfine. La polyoléfine utilisée peut être stabilisée contre l'hydrolyse et/ou la chaleur. Le matériau utilisé est ici un polypropylène tel que celui produit par la société BASELL sous la référence MOPLEN EPD60R ou celui produit par la société BOREALIS sous la référence BHC5012. Le polymère utilisé peut être une autre polyoléfine telle qu'un polyéthylène. La polyoléfine apporte des propriétés barrière au fluide transporté. En particulier, la couche intermédiaire peut former une protection encore plus importante vis-à-vis de l'hydrolyse du fait de ses propriétés barrière à l'eau qui sont très élevées. Ces propriétés barrière viennent encore renforcer les propriétés barrière de la couche interne et assurent une protection optimale de la couche externe qui remplit elle principalement une fonction de résistance à la pression et à la température.

Dans la variante de réalisation représentée à la figure 4, une couche intermédiaire 9 supplémentaire a été disposée entre la couche intermédiaire 7 et la couche externe 8. La couche intermédiaire 9 est réalisée en un matériau thermoplastique qui présente des propriétés d'adhésion avec les matériaux de la couche intermédiaire 7 et de la couche externe 8 afin d'assurer une cohésion entre ces deux couches.

Le matériau thermoplastique utilisé pour la couche intermédiaire 9 est ici une polyoléfine modifiée comme par exemple un polypropylène greffé, un copolymère propylène-éthylène ou encore un polyéthylène greffé avec des fonctions chimiques compatibles avec le matériau thermoplastique de la couche externe 8. Cette polyoléfine modifiée est par exemple une de celles produites par la société MITSUI CHEMICALS sous les références ADMER et plus particulièrement ADMER QF550E, QB510E, AT843E, AT190E, AT1657E, AT1658E ou QF551E. La polyoléfine peut être également une de celles produites par la société EMS CHEMIE sous les références GRILON et plus particulièrement GRILON XE3153 ou CRBE ; ou une de celles produites par la société DUPONT DE NEMOURS sous les références BINEL, série 5000 et plus particulièrement 50E571 ou 50E725.

Un thermoplastique élastomère compatible avec le polyamide peut également être utilisé pour la couche intermédiaire 9. Ce thermoplastique élastomère peut être par exemple un polypropylène incorporant des phases caoutchoutiques telles qu'un éthylène propylène diène monomère (EPDM). Ce matériau peut incorporer une phase de polyamide de même nature que celui utilisé pour la couche externe 8.

Le thermoplastique élastomère utilisé est par exemple un de ceux produits par la société AES sous les références SANTOPRENE et plus particulièrement SANTOPRENE 191-55PA, 191-75PA ou 191-85PA.

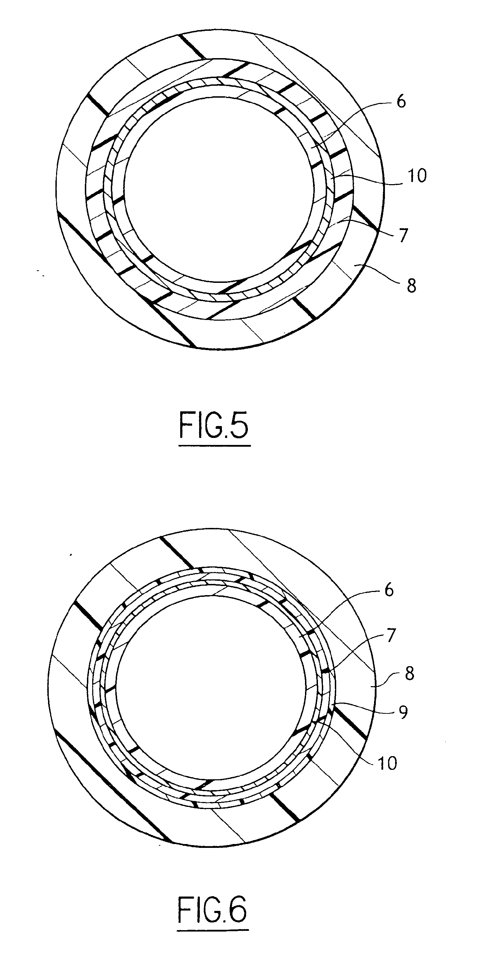

Dans la variante de la figure 5, une couche intermédiaire 10 supplémentaire est disposée entre la couche interne 6 et la couche intermédiaire 7.

La couche intermédiaire 10 est en un matériau thermoplastique présentant des propriétés d'adhésion avec les matériaux de la couche interne 6 et de la couche intermédiaire 7. Ce matériau thermoplastique comporte au moins une phase qui est compatible avec le matériau de la couche interne 6 et qui est modifiée par des fonctions chimiques compatibles avec le matériau de la couche intermédiaire 7, ou il comporte au moins une phase qui est compatible avec le matériau de la couche intermédiaire 7 et qui est modifiée par des fonctions chimiques compatibles avec le matériau de la couche interne 6. Le matériau utilisé pour la couche intermédiaire 10 peut également être un mélange d'un matériau compatible avec le matériau de la couche interne 6 et d'un matériau compatible avec le matériau de la couche intermédiaire 7.

Le matériau thermoplastique utilisé pour la couche intermédiaire 10 est par exemple celui produit par la société MITSUI CHEMICALS sous la référence TL221.

Les modes de réalisation des figures 3, 4 et 5 sont avantageux lorsque la cohésion de couches en contact direct les unes sur les autres est suffisante pour l'application envisagée. De préférence toutefois, le système de liaison aux extrémités est conçu afin de compenser un éventuel manque de cohésion des couches entre elles de manière à conserver une résistance mécanique et une étanchéité suffisantes du raccordement des extrémités de la conduite.

Dans la variante de la figure 6, deux couches intermédiaires supplémentaires 9, 10 ont été ajoutées à la structure décrite en référence à la figure 3.

La couche intermédiaire 9, disposée entre la couche intermédiaire 7 et la couche externe 8, est identique à celle précédemment décrite en relation avec la figure 4

La couche intermédiaire 10, disposée entre la couche interne 6 et la couche intermédiaire 7, est identique à celle précédemment décrite en relation avec la figure 5.

Cette variante est particulièrement intéressante lorsqu'une cohésion relativement importante est nécessaire entre les couches 6, 7 et 8.

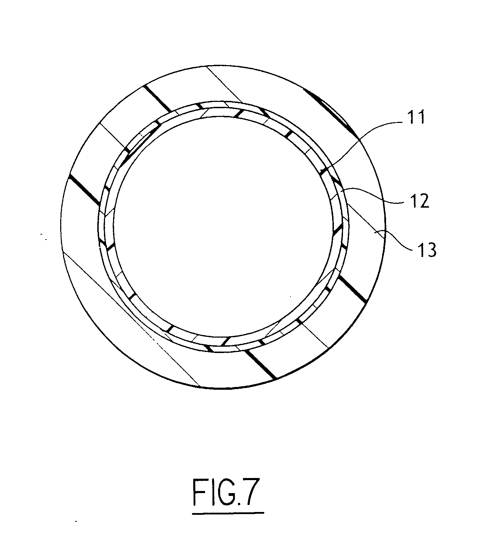

En référence à la figure 7, la conduite selon le troisième mode de réalisation de l'invention, est une conduite tricouche qui comporte une couche interne 11, une couche intermédiaire 12 et une couche externe 13.

La couche interne 11 est en un matériau thermoplastique identique à celui de la couche interne 1 décrite précédemment.

Le matériau de la couche intermédiaire 12 est identique à celui de la couche intermédiaire 10 décrite précédemment.

Le matériau de la couche externe 13 est identique à celui de la couche intermédiaire 7 décrite précédemment.

Cette solution est particulièrement avantageuse lorsque la température d'utilisation ne dépasse pas 100°C. Le matériau de la couche externe 13 assure alors la résistance mécanique de manière suffisante en particulier pour des pressions inférieures à deux bars environ.

La couche intermédiaire 12 est facultative lorsque la cohésion entre la couche interne 11 et la couche externe 13 est suffisante pour l'application envisagée.

La conduite conforme aux modes et variantes de réalisation décrits ci-dessus est fabriquée par coextrusion de toutes les couches. Elle peut être obtenue également par coextrusion de certaines couches puis recouvrement par une autre, ou par extrusion d'une couche puis recouvrement. La conduite peut être réalisée par extrusion soufflage.

La conduite peut être lisse ou annelée, et subir des traitements tels que du thermoformage.

Bien entendu, l'invention n'est pas limitée au mode de réalisation décrit et on peut y apporter des variantes de réalisation sans sortir du cadre de l'invention tel que défini par les revendications.

En particulier, par conduite, on entend toute partie d'un circuit de transport de fluide.

## Revendications

1. Conduite multicouche, **caractérisée en ce qu'**elle comporte une couche interne (1 ; 6 ; 11) comportant un polymère basé sur un monomère 4-méthylpentène-1 et une couche externe (2 ; 8) comportant un polyamide.

2. Conduite multicouche selon la revendication 1, **caractérisée en ce qu'**elle comprend au moins une couche intermédiaire (3 ; 7, 9, 10 ; 12) en matériau thermoplastique.

3. Conduite multicouche selon la revendication 2, **caractérisée en ce qu'**elle comprend une couche intermédiaire (3) unique au contact des couches interne (1) et externe (2), le matériau thermoplastique de la couche intermédiaire présentant des propriétés d'adhésion avec les matériaux des couches interne et externe.

4. Conduite multicouche selon la revendication 2, **caractérisée en ce qu'**elle comprend une couche intermédiaire (7) dont le matériau thermoplastique comporte une polyoléfine.

5. Conduite multicouche selon la revendication 4, **caractérisée en ce que** la couche intermédiaire (7)dont le matériau thermoplastique comporte une polyoléfine constitue une première couche intermédiaire, et **en ce que** la conduite comprend au moins une couche intermédiaire (9, 10) supplémentaire en matériau thermoplastique.

6. Conduite multicouche selon la revendication 5, **caractérisée en ce qu'**elle comprend une couche intermédiaire supplémentaire (10) qui est disposée entre la couche interne (6) et la première couche intermédiaire (7) et dont le matériau thermoplastique présente des propriétés d'adhésion avec les matériaux de la couche interne de la première couche intermédiaire.

7. Conduite multicouche selon la revendication 5 ou la revendication 6, **caractérisée en ce qu'**elle comprend une couche intermédiaire supplémentaire (9) qui est disposée entre la première couche intermédiaire (7) et la couche externe (8) et dont le matériau thermoplastique comporte une polyoléfine modifiée pour être compatible avec les matériaux de la première couche intermédiaire et de la couche externe.

8. Conduite multicouche selon la revendication 5 ou la revendication 6, **caractérisée en ce qu'**elle comprend une couche intermédiaire supplémentaire (9) qui est disposée entre la première couche intermédiaire (7) et la couche externe (8) et dont le matériau thermoplastique comporte un thermoplastique élastomère modifié pour être compatible avec les matériaux de la première couche intermédiaire et de la couche externe.
